# EUROPEAN PATENT SPECIFICATION

(11) **EP 2 827 279 B1**
(45) Date of publication and mention of the grant of the patent: **14.04.2021**
(21) Application number: 14176416.7
(22) Date of filing: 09.07.2014
(51) Int. Cl.: G06F 21/85, H01R 13/639, H01R 13/66, E05B 73/00, H01R 13/627

(54) **Electro-mechanic USB locking device**
Elektromechanische USB-Sperrvorrichtung
Dispositif de verrouillage d'USB électro-mécanique

(30) Priority: 09.07.2013 US 201313937581
(43) Date of publication of application: 21.01.2015
(73) Proprietor: High Sec Labs Ltd., 3079510 Caesarea (IL)
(72) Inventor: Soffer, Aviv, 30889 Caesarea (IL)
(74) Representative: Beck & Rössig European Patent Attorneys

(56) References cited:
- WO-A2-2012/095852
- US-A1- 2005 174 238
- US-A1- 2007 004 265
- US-A1- 2008 041 125

## Description

The present invention relates to the technical filed of computer information security. In particular, the invention relates to an electronic USB security device according to claim 1 and to a method using an electromechanical USB lock device and comprising removing an electromechanical USB lock device from a USB port of a host computer by an authorized user as defined by claim 12.

Generally, universal serial bus (USB) ports provide a serial bus standard for connecting devices to computers. Most modern computers include at least one, and usually a plurality of USB ports. USB ports are used to connect peripherals such as mice, keyboards, scanners, digital cameras, printers, external storage, etc. Anyone with access to a computer's USB port can plug a portable flash drive or other mass storage device into the port and attempt to download information from the computer. Unauthorized, downloading information from the computer is a security problem.

US Patent application 2008/0041125 USB PORT LOCKING AND BLOCKING DEVICE, to Carl Poppe, discloses a mechanical lock for USB ports.

PCT application WO2013042108) SECURITY PLUG FOR PREVENTING ACCESS TO A USB SOCKET AND SECURED USB DEVICEA, to Zeuveni Zadok, discloses a security plug for preventing access to a USB socket adapted to complete an electrical circuit when inserted into the USB socket such that its removal from the USB socket breaks the circuit and is detected by a host computer.

A mechanical lock for USB port is available from Kensington (www.kensington.com)

Another mechanical lock for USB port is available from Lidy (LINDY USA, 14327 Bledsoe Rd. Athens, AL 35613 (http://www.lindy-usa.com/)

Security software (SW) that locks and manages the USB ports are available. However, as with any software based security measure, this software may be bypassed, for example if the computer is infected, or if the abuser has obtained administrator permissions.

For example: USB flash dive control software may be downloaded from http://www.softpedia.com/get/System/System-Miscellaneous/USB-Port-Blocker.shtml

USB blocker software may be obtained from iSM - Institut für System-Management, Oldendorfer Str. 12, 18147 Rostock, Germany (http://www.usb-blocker.com/)

A device according to the preamble portion of claim 1, though not being related to computer information security, is known from US 2005/174238 A1. This known device addresses theft protection of electronic devices. It includes a plug which is mounted externally on an electronic device having a corresponding receptacle. The theft protection function includes alarm electronics encapsulated in a rear part of the plug, which may be a USB plug having a locking mechanism to physically lock the theft protection plug (TTP) in the device to be protected. The TTP may have a coil magnet which releases the locking mechanism. Software in the device to be protected can control the functions in the TTP via the plug. The functions of the TTP may be controlled by other known authentication techniques.

In view of the security risks associated with USB devices connected to computers, and in view of the shortcoming of prior art USB protection methods and devices, there is a need for a USB port protection device that at least will prevent cyber attacks.

This technical problem is solved by a device as indicated in claim 1 as well as by a method as defined in claim 12. Advantageous embodiments are indicated in further claims.

Some embodiments of the invention are herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
- Figure 1: Schematically illustrates a prior-art USB security plug for preventing access to the USB port based on PCT application WO 2013/042108 A1.
- Figure 2: Schematically illustrates another prior-art device a mechanical USB locking plug described in US Patent application US 2008/0041125 A1.
- Figure 3: Schematically illustrates a high-level block-diagram of an exemplary method and embodiment not covered by the claimed invention of a USB security plug having an electrical solenoid lock wherein the electrical lock is driven by a security controller function that is coupled to the USB interface, seen here before being plugged into the computer USB jack.
- Figure 4: Schematically illustrates a high-level block-diagram of the exemplary method and embodiment of figure 3 as it first touches the computer USB jack's contacts.
- Figure 5: Schematically illustrates a high-level block-diagram of an exemplary method and embodiment of figures 3 and 4 when it is fully plugged in and locked into the computer USB jack.
- Figure 6: Schematically illustrates a high-level block-diagram of an exemplary method and embodiment not covered by the claimed invention illustrated in figures 3 to 5 above, configured to interface with a computer USB jack having a thick panel wall.
- Figure 7: Schematically illustrates a high-level block-diagram of an exemplary method and embodiment not covered by the claimed invention illustrated in figures 3 to 6 above, having an oversize removable ring blocking nearby USB jack.
- Figure 8: Schematically illustrates a high-level block-diagram of another exemplary method and embodiment not covered by the claimed invention of a USB security plug having an electrical solenoid lock driven by a security controller that is coupled to a remote-control receiver.
- Figure 9: Schematically illustrates a high-level block-diagram of an exemplary method and embodiment of the present invention of a keyboard or mouse security device, having unidirectional data flow enforcement, wherein the electrical lock is driven by a security controller coupled to a remote-control receiver.
- Figure 10: Schematically illustrates a high-level block-diagram of another exemplary method and embodiment of the present invention of a USB filter security device.
- Figure 11: Schematically illustrates a high-level block-diagram of another exemplary method and embodiment of the present invention of a keyboard or mouse security device having unidirectional data flow enforcement, similar to the device in figure 9 above, wherein, the electrical lock is driven by the host emulator function.
- Figure 12: Schematically illustrates a high-level block-diagram of another exemplary method and embodiment not covered by the claimed invention of a cable locking device having an electrical lock that is driven by a security controller coupled to a wired or wireless remote-control receiver.
- Figure 13: Schematically illustrates a high-level block-diagram of another exemplary method and embodiment not covered by the claimed invention of a cable locking device having an electrical lock that is driven by a connected host.
- Figure 14: Schematically illustrates a bottom side view mechanical diagram of an exemplary embodiment of the present invention of a keyboard or mouse security device having a unidirectional data flow enforcing, similar to the device seen in figure 9.
- Figure 15: Schematically illustrates a top side view mechanical diagram of an exemplary embodiment of the present invention of a keyboard or mouse security device seen in figure 9.
- Figure 16: Schematically illustrates a flowchart of USB Lock device installation by an authorized user and continuous monitoring.
- Figure 17: Schematically illustrates a flowchart of USB Lock device removal by an authorized user.

### DETAILED DESCRIPTION OF THE DRAWINGS

Before explaining at least one embodiment of the invention in detail, it is to be understood that the invention is not necessarily limited in its application to the details set forth in the following description or exemplified by the examples. The invention is capable of other embodiments or of being practiced or carried out in various ways.

It will be appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

In discussion of the various figures described herein below, like numbers refer to like parts. The drawings are generally not to scale. For clarity, non-essential elements may have been omitted from some of the drawing.

To the extent that the figures illustrate diagrams of the functional blocks of various embodiments, the functional blocks are not necessarily indicative of the division between hardware circuitry. Thus, for example, one or more of the functional blocks (e.g., processors or memories) may be implemented in a single piece of hardware (e.g., a general purpose signal processor or random access memory, or the like) or multiple pieces of hardware. Similarly, the programs may be stand alone programs, may be incorporated as subroutines in an operating system, may be functions in an installed software package, and the like.

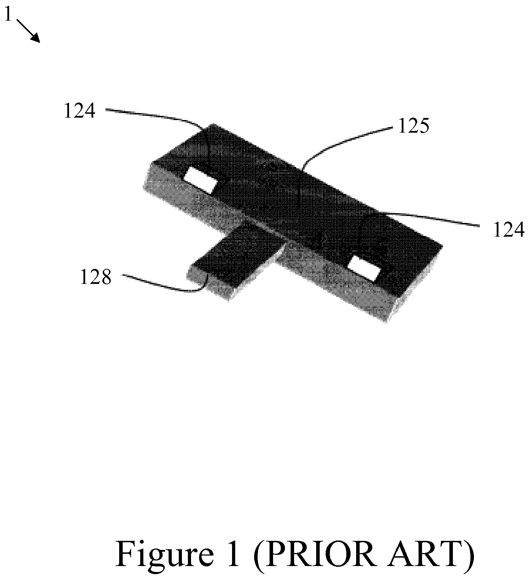

Figure 1 illustrates a prior-art USB security plug for preventing access to the USB port based on PCT application WO 2013/042108 A1. This prior-art security plug device 1 is used to prevent access to USB port.

The security plug 13 has a planar body portion dimensioned for insertion into the frame of the USB jack (not shown in this figure). The body portion may also be dimensioned such that an end surface thereof is flush with an outer edge of the USB jack frame when the plug is fully inserted therein. At least one prong 124 is supported by a major surface 125 of the body portion for engaging a corresponding aperture in the USB jack frame whereby an edge of the aperture engages the prong 124 and impedes removal of the plug from the socket. A frangible tab 128 fixed to the end surface of the plug and adapted for easy removal therefrom after insertion of the plug into the USB jack. In one embodiment, the frangible tab 128 is adapted to be fractured from the body portion upon attempting to remove the plug from the socket leaving a facture mark. This both prevents removal while also providing an immediate visual indication that the plug has been tampered with.

Also described in this patent application are security functions that enable software detection of the plug presence through software running on the host computer. Between the VBUS and Ground connections (pins 1 and 4 of the USB plug) there is connected a resistor R (not shown in this figure) of sufficiently high value e.g. 100 k Ohm to impose little current drain. Software in the host computer monitors the current flowing between VBUS and Ground so as to detect whether the security plug is connected or removed as a function of current flow. Specifically, any status in the connection or disconnection of the security plug while the computer is operating can be detected in this manner. In order to provide an additional layer of security that prevents tampering while the computer is switched off, a memory device storing a unique ID may be connected across the data pins 2 and 3 so as to allow the host computer to identify the device. The host computer monitors the USB ports and detects when a device is removed or inserted and uses the ID to establish the identity of the device. The user is then prompted to enter an authorization code that is matched to a database of authorized users stored in the computer in order to determine whether the user is authorized to remove or insert the identified device and take precautionary or evasive action if necessary.

While the apparatus described above provides a basic solution for the problem, it is suffering from some severe security vulnerabilities:
1. It does not prevent potential attacker attempting to remove the plug from its jack through brute force. The prior-art apparatus described lack a positive locking mechanism.
2. The prior-art apparatus described is for one-time use. Once inserted into the jack - it is difficult to remove it from the jack without damaging both the device and the jack. Most users would prefer a solution that preserves the function of the USB ports in case that it may be required in the future. For example an administrator may want to use the plugged USB port to reboot or fix that computer.
3. The prior-art apparatus described is not secured when the host computer is powered off. Attacker may override authentication security features by powering of the target computer.

The above security vulnerabilities may prevent the use of such device in organizations having strict security policy.

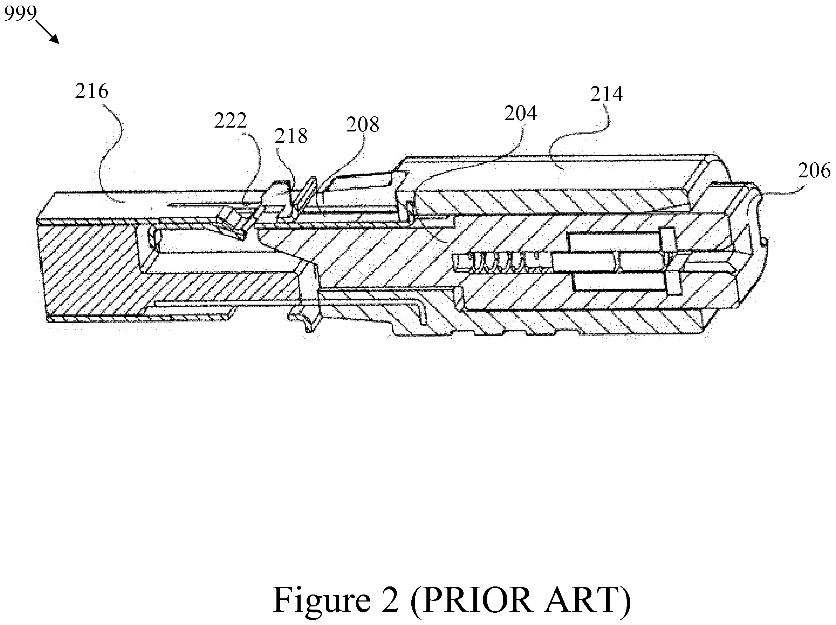

Figure 2 illustrates a cross-sectional view of another prior-art mechanical USB locking plug device described in US Patent application US 2008/0041125 A1.

A lock 999 with a housing 214 mounted onto a retaining sheath, which is insertable to a USB port (not shown in this figure). Locking member 208 is pivotally connected to the rear end of retaining sheath. Locking member 208 is provided with two protrusions 218, which correspond to standard openings 222 in a USB port 216. Locking member 208 has a bent, preformed shape, such that in the absence of external forces it runs diagonally; its front end is farther inward than its back end. Lock 999 further includes lock button 206 which protrudes from the rear end of housing 214. Lock button 206 is depressible by a user to lock the lock 999. Lock button 206 is connected to linear cam 204, which pivots locking member 208 by cooperating with the ramped camming surface of locking member 208.

While this prior art device solves the physical security problem is suffers from several disadvantages:
1. There is no way for the connected computer to monitor the security of its ports. This apparatus cannot be monitored through software.
2. The use of mechanical keys is not secure. Attacker may gain access to the matching key or even similar key and use it to remove this device. Mechanical locks may be picked relatively easily.
3. Keys management - If all (or a plurality of) locks are identical across the organization then there may be a security threat if one key finds its way to the attacker's hand. On the other hand, if each of the keys is different, then it is very difficult for large organization to manage and match these keys to their corresponding lock.

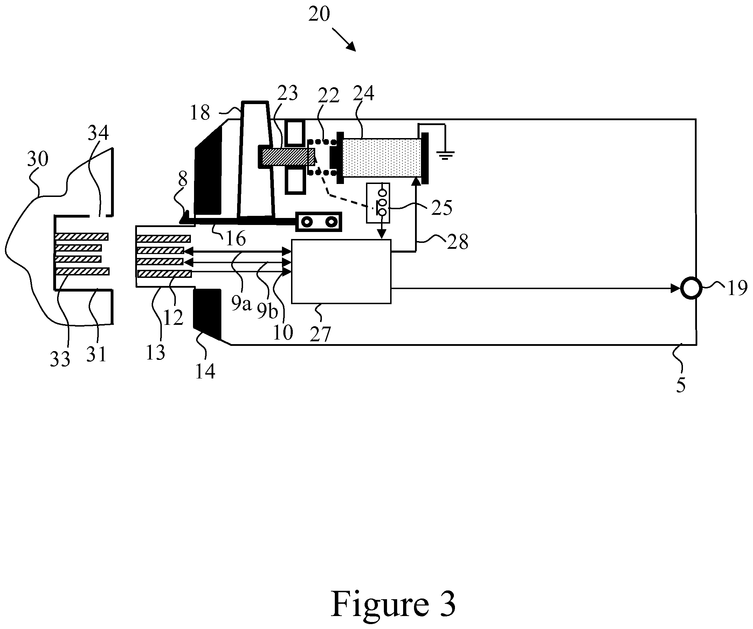

Figure 3 schematically illustrates a high-level functional diagram of an exemplary method and embodiment not covered by the claimed invention of an electronic USB security device having an electromechanical solenoid lock. In this figure the electronic USB security device 20 is not plugged into the computer USB jack yet.

In this embodiment the electronic USB security device 20 comprises a security plug 13 which is designed to fit standard USB jack 31 of host device 30 such as the one illustrated to at the left side. USB jack 31 may be any open and unused USB port in host PC, laptop, docking station, appliance, server etc. USB security plug 13 comprises electrical contacts 12 which are arranged to touch and make electrical contact with contacts 33 of USB jack 31.

It should be noted that the term "host", "host device" or "host computer" may be any electronic or computing device having a USB female USB jack.

Authentication and security function 27 is connected to the USB plug contacts 12 through lines 9a and 9b to enable software loaded on host computer 30 to positively authenticate the USB security plug 20.

In this document the term "security function" or other references to "function" or "functions" refer to hardware capable of performing the logical function. The hardware may comprise one or a plurality of electronic circuitries. The hardware may be based on an ASIC (Application Specific Integrated Circuit), a processor accompanied with the necessary memory, a programmable device such as FPGA (Field Programmable Gate Array), or other device or devices capable of performing the desired function. The block diagrams seen here may refer to the function (rather then the hardware sub-units) since modern logical hardware are capable of performing several functions. Thus, a plurality of logical functions may be performed by the same hardware. Alternatively, each logical function may be performed by a dedicated hardware, for example a single chip, or several chips. A man skilled in the art of electronics may find several ways to realize and implement the "function" or "functions". All such implementations are within the scope of this invention.

Power required for the Authentication and security function 27, and other components in the electronic USB security device 20 is received from host computer USB contacts 33 via plug contacts 12 and line 10. Power is preferably 5VDC as defined in USB standard. However, DC to DC power supply or power regulator may be used for modifying the USB standard voltage to voltages, or voltages required for the operation of the USB security 20. Authentication and security function 27 also comprising of switching function that powers the electromechanical solenoid 24 via solenoid activation line 28 based on commands received from host computer 30.

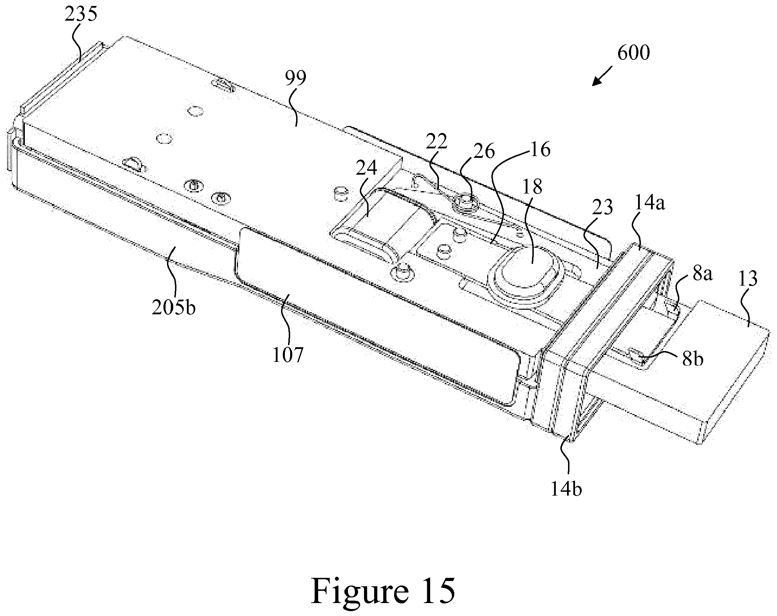

Electromechanical solenoid 24 is coupled to a pin or lever 23 that is loaded to the forward position when solenoid 24 is de-energized by spring 22. Spring 22 may be torsion spring, leaf spring or any other type of elastic component. Metal pin or lever 23 is inserted inside release push-button 18 to prevent user activation of the release action when the electromechanical solenoid 24 is not energized. Pin or lever 23 is preferably made of magnetic metal such that it is influenced by solenoid 24, optionally; the part of pin or lever 23 close to the solenoid 24 is made of magnetic metal such that it is influenced by solenoid 24. Optionally the part of pin or lever 23 close to the solenoid 24 comprises a permanent magnet such that it is influenced by solenoid 24. Optionally pin or lever 23 is constructed as a balanced lever (see figure 15) such that it is not influenced by linear acceleration, such that lock cannot be opened by a sharp jerk. Optionally the roles of pin or lever 23 and solenoid 24 are reversed such that solenoid 24 is the moving part.

Push-button 18 is mounted on a flexible leaf spring 16 having one or more locking teeth 8 that are designed to engage with shielding tab holes 34 inside standard USB jack 33, locking the security plug 13 to the USB jack 33. Leaf spring 16 is designed to provide pressure on locking teeth 8 to secure the USB security plug having an electromechanical solenoid lock 20 inside host computer USB jack 31 and to prevent its advertent, malicious, or inadvertent removal.

Optional switch or sensor 25 provides feedback to the Authentication and security function 27 about the current position of the Metal pin or lever 23. Alternatively, sensor 25 is configured to detect the position of push-button 18 or Leaf spring 16.

Optional visual indicator 19, for example an LED derived by Authentication and security function 27 provides user indication when the device is properly locked, for example through green light. Bi-color LED may be used to provide other state indications such as unlocked state (red color for example).

Enclosure 5 is designed to withstand mechanical tampering and therefore it is preferably made from material such as strong plastic or metal alloy. Inclusion of ferromagnetic metal, (for example mu-metal, http://en.wikipedia.org/wiki/Mu-metal) in the enclosure 5 may be used to prevent abusing the USB security plug 20 by attempting to influence lever 23 wing an external magnetic field, for example by placing a magnet near it.

Optionally, one or more Filler Removable rings 14 are designed to fill the gap between the security plug enclosure 5 and the mating USB jack 31 when the USB security plug 20 is fully engaged with the USB jack. These Filler Removable rings 14 may be removed by the user to adjust the device for various thick host computer panels (as will be further explained below).

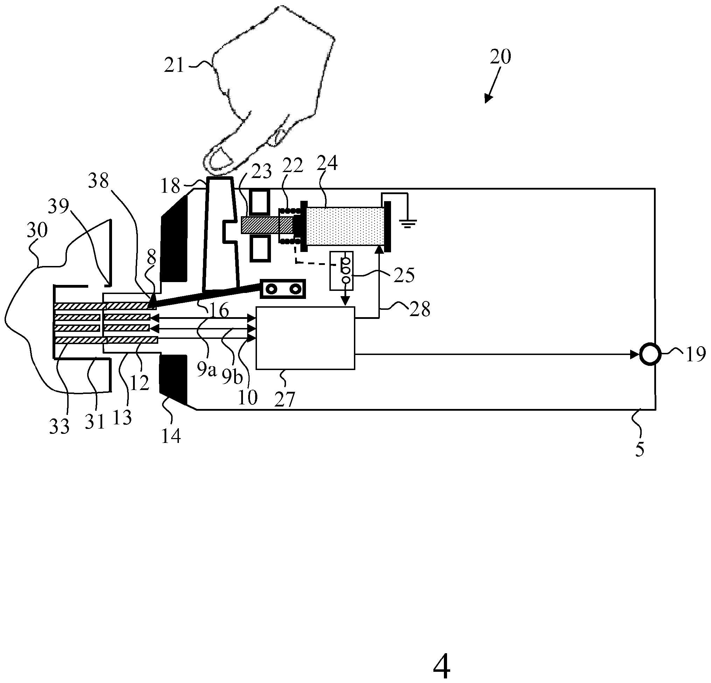

Figure 4 illustrates a high-level functional diagram of the same USB security plug 20 not covered by the claimed invention illustrated in figure 3 above wherein in this figure the USB security plug 20 is being inserted into the host USB jack 31 while the user 21 presses push-button 18.

During initial insertion of the USB security plug 20, its USB plug contacts 12 touches host USB connector 31 mating contacts 33. Once the coupled Authentication and security function 27 is powered and recognizes initial insertion state it energizes the electromechanical solenoid 24 via solenoid activation 28. Solenoid 24 pulls the metal pin or lever 23 that in turn moves out of the notch in push-button 18 to enables user finger 21 pressing push-button 18 to lower Leaf spring 16 and locking teeth 8 to enable full insertion of security plug 13 of USB security plug 20 into USB lack 31.

Alternatively, user 21 may push the enclosure 5, thus forcing locking teeth 8, Leaf spring 16 to bend downwards as the slopping face 38 of locking teeth 8 meet the edge 39 of USB jack 31.

Optionally, during the USB security plug insertion, when electromechanical solenoid 24 is energized, Authentication and security function 27 turns off LED indicator 19 or changes its color to indicate that the device is not secured.

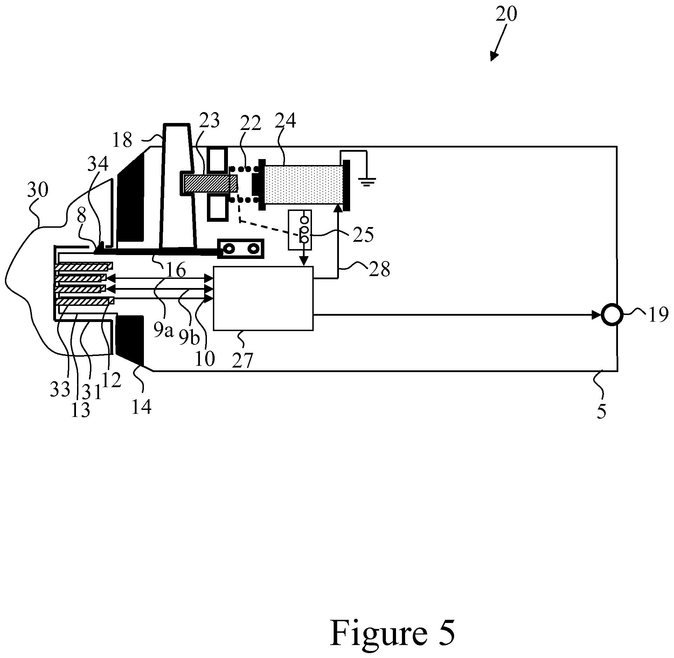

Next figure 5 illustrating the same device 20 in its fully inserted state.

Figure 5 illustrates a high-level functional diagram of the USB security plug embodiment not covered by the claimed invention illustrated in figures 3 and 4 above wherein in this figure the same USB security plug 20 is fully inserted and secured into the host USB jack 31.

Once the USB security plug 13 of electronic USB security device 20 is fully inserted into the host USB jack 31, locking teeth 8 penetrates the USB jack shielding tab holes 34 and therefore mechanically secure the electronic USB security device 20 into position inside host USB jack 31. Locking teeth 8 are sized to fit into USB jack shielding tab holes 34, enabling leaf spring 16 to return to its normal position and push the push-button 18 upwards. When Authentication and security function 27 de-energizes the solenoid 24, metal pin or lever 23 can return into the locked position inside push-button 18 and signal its locked position to Authentication and security function 27 through switch or sensor 25.

Once the electronic USB security device 20 reached its locked position as indicated by switch or sensor 25, Authentication and security function 27 turns on LED indicator 19 to indicate that the device is secured.

Once the electronic USB security device 20 is locked in place, the only possible way to remove it from USB jack 31 is through the following process:
a. The user uses a local or remote security program communicating with the host USB port associated with USB jack 31, to enter a secret key or another authentication protocol as defined in that program.
b. Command is sent to the proper host 30 USB port, associated with USB jack 31, to release the lock. Command is preferably encrypted to improve security.
c. Once the command is received and preferably authenticated by the Authentication and security function 27, the Authentication and security function 27 energizes the solenoid 24 and provides user indication through LED indicator 19.
d. The user then can press the push-button 18 to bend the leaf spring 16 and release the locking teeth 8 from the host USB jack 31 shielding tab holes 34.
e. The user now may pull the USB security plug 20 out of the USB jack 31 of host 30.
f. Local or remote security program may thus detect and record the removal of USB security plug 20 as the security program is not able of communicating with the Authentication and security function 27.

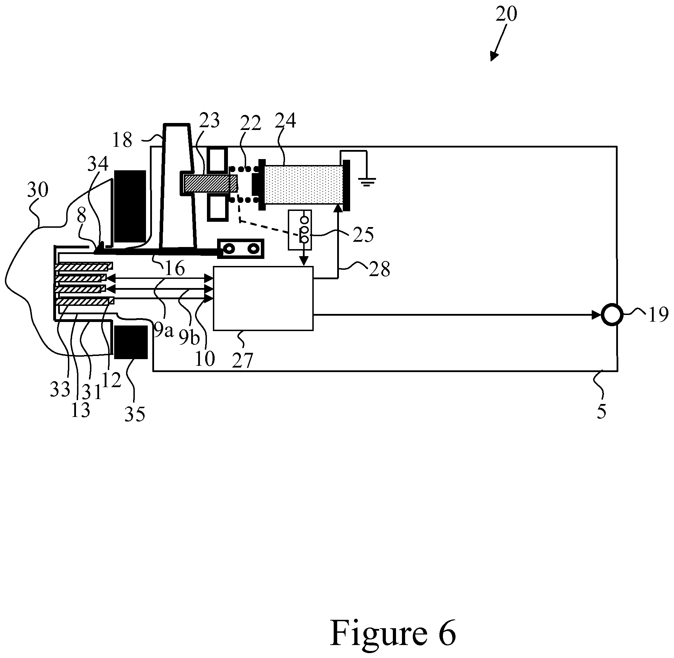

Figure 6 illustrates a high-level functional diagram of the same USB security plug embodiment not covered by the claimed invention illustrated in figures 3 to 5 above wherein in this figure the USB security plug 20 is having its filler removable ring 14 (see figures 3-5 above) removed by the user.

Such removal may be needed to enable proper insertion of the USB security plug 20 into the USB jack 31 of host device 30 even when the wall 35 in front of the jack is thick. A thick wall 35 may prevent the proper insertion of the USB security plug 20 and therefore the device is preferably equipped with one or more filler removable rings 14 that enable the user to adjust the device for host device 30 wall thicknesses.

It should be noted that without such filler removable rings 14, a gap between the USB security plug device 20 and the host device 30 USB jack 31 may be formed when wall 35 is thin or missing. Such gap is potential security vulnerability as an attacker may insert a thin tool or metal plate inside that gap and bend the locking teeth 8 and leaf spring 16 downwards to release the USB security plug 20.

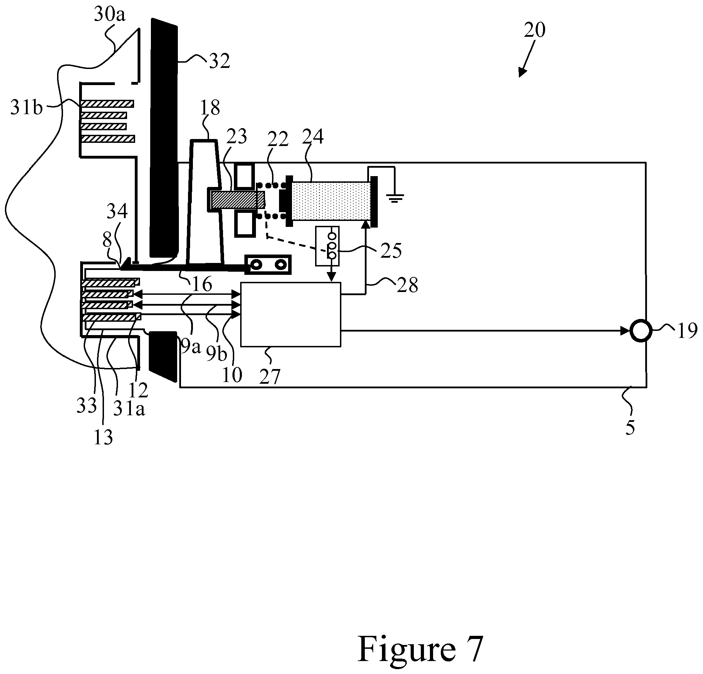

Figure 7 illustrates a high-level functional diagram of the same USB security plug embodiment not covered by the claimed invention illustrated in figures 3 to 6 above wherein in this figure the device 20 is having its standard size filler removable ring 14 (see figures 3-5 above) removed by the user and replaced by an oversized removable ring 32.

Such oversized removable ring 32 may be used to enable mechanical blocking of additional nearby USB or other jacks. For example in this figure 7 the host device 30a is having USB jack 31a blocked by the USB security plug 20 while nearby USB jack 31b is covered by the oversized removable ring 32.

It should be noted that oversized removable rings 32 may be designed with different shape and installation orientations to enable blocking of connectors located at different positions around the device 20.

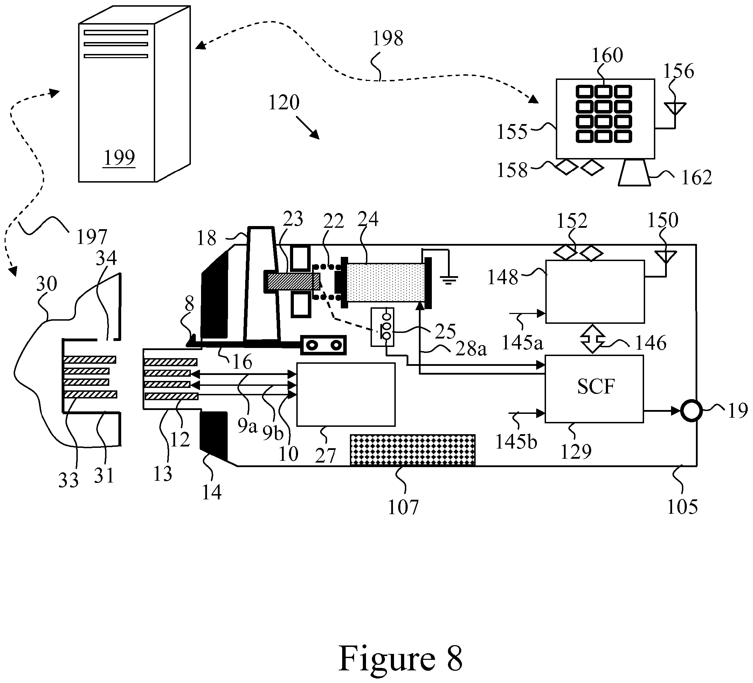

While this exemplary embodiment not covered by the claimed invention provides good management and security levels, in some cases a higher security level may be needed. In particular there is a potential security vulnerability of a malicious code running on the host device 30 that may target the USB security plug 20 in attempt to support an unauthorized removal of the plug. This issue may be addressed by other embodiment as illustrated in figure 8-12 below.

Figure 8 illustrates a high-level functional diagram of an isolated USB security plug 120 according to an exemplary embodiment not covered by the claimed invention having a solenoid that is driven by a Security Controller Function (SCF) 129 which is logically isolated from the USB jack interface of host 30. Such isolation enhances the device security as the release of the isolated USB security plug 120 is completely independent from the protected host device 30.

In this embodiment not covered by the claimed invention solenoid 24 is driven by SCF 129 that also drives the optional LED indicator 19. The SCF 129 is also coupled to the switch or sensor 25 to receive indications about the device state. The SCF 129 is powered from the USB interface 5V power through line 145b via line 10.

It should be noted that the USB security plug 120 state can be fully defined by the switch or sensor state 25 and the 5V USB power input 145b. As state information can only be sensed while USB security plug 120 is powered and therefore inserted into a USB port of host device 30. When USB security plug 120 is fully inserted and powered there are only 2 state options:
a. Push-button 18 is locked
b. Push-button 18 is unlocked.

The SCF 129 receives control commands from the Wired or wireless remote-control receiver function 148 via bi-directional lines or bus 146. Wired or wireless remote-control receiver function 148 receives commands from remote device 155 through antenna 150 or electrical contacts 152. Antenna 150 may be Radio Frequency antenna or an inductor receiving commands through electromagnetic inductance. Wired or wireless remote-control receiver function 148 receives power from the USB interface 5V power through lines 145a and 10. Alternatively Wired or wireless remote-control receiver function 148 may receive power from the antenna 150 if inductor is used to receive commands and power. If Wired or wireless remote-control receiver function 148 is wireless receiver then antenna 150 must be installed outside the device enclosure 105 metal parts or alternatively, enclosure 105 is made of plastic material that do not significantly attenuating command signal reception.

Alternatively remote-control receiver function 148 may receive power from the remote device 155 through electrical contacts 152.

Wired or wireless remote-control receiver function 148 may use any secure wired or wireless communication method suitable for short distance, for example:
- Conventional wired protocol
- Radio Frequency (RF) remote control link
- RFID (Radio Frequency Identification) link
- Single wire communication protocol link
- Human body communication link
- Optical communication link

Remote control device 155 uses the selected link as described above to provide short distance remote control of the isolated USB security plug device 120. This control is preferably achieved through an encrypted communication link using device 155 antenna 156 (for wireless link) or contacts 158 (for wired link). Remote control device 155 may further comprising of means to detect nearby USB plug device serial number through bar-code reader 162 or an integrated receiver function that uses same antenna 156.

Keypad or touch-screen 160 may be added at the Remote control device 155 to enable manual entry of USB security plug serial numbers or to enter other commands.

Tamper Evident Label 107 may be installed on the isolated USB security plug device 120 outer enclosure 105 to provide clear indication if the device was mechanically tampered. Such label is preferably holographic surface having a special adhesive layer. Once the label is peeled or removed - clear indications of such removal appears in or under that label.

While installation (insertion) of this device 120 is similar to device 20 shown in figures 3 to 7 above, the removal of this device is different. The user uses an appropriate Remote Control device 155 to detect, scan or enter appropriate USB security code associated with the specific isolated USB security plug device 120 and then send an encrypted command to unlock that device.

Optional LED indicator 19 provides a visual indication that the specific isolated USB security plug device 120 received the command and it is ready for safe removal (that is, solenoid 24 is energized). After preprogrammed time interval solenoid 24 is de-energized if the USB security device 120 was not removed first.

Remote control device 155 may serve as a master key for all USB security plug devices in the department / site / organization or it may be programmed to control only specific devices as needed according to the organizational security scheme.

Optionally, Remote control device 155 is in communication 198 with an optional security server 199 that monitors, logs and verify each removal of an isolated USB security plug device 120. Server 199 may be local, may be part of Remote control device 155, or may be a remote server. Optionally, sending the unlocking code is possible only after verification by the security server. Optionally, the optional security server 199 is further in communication 197 with host 30 in order to verify that the specific isolated USB security plug device 120 is installed in one of its USB jacks 31. Optionally, sending the unlocking code is possible only after verification by the security server at host 30 that isolated USB security plug device 120 is installed in one of its USB jacks 31, and there is authorization for its removal.

Communication channels 198 and 197 may be wired or wireless channels and optionally are standard computer communication channels, for example the communication channels used in the organization (e.g. LAN, WAN, WiFi, etc.). Preferably, secure communication protocol is used.

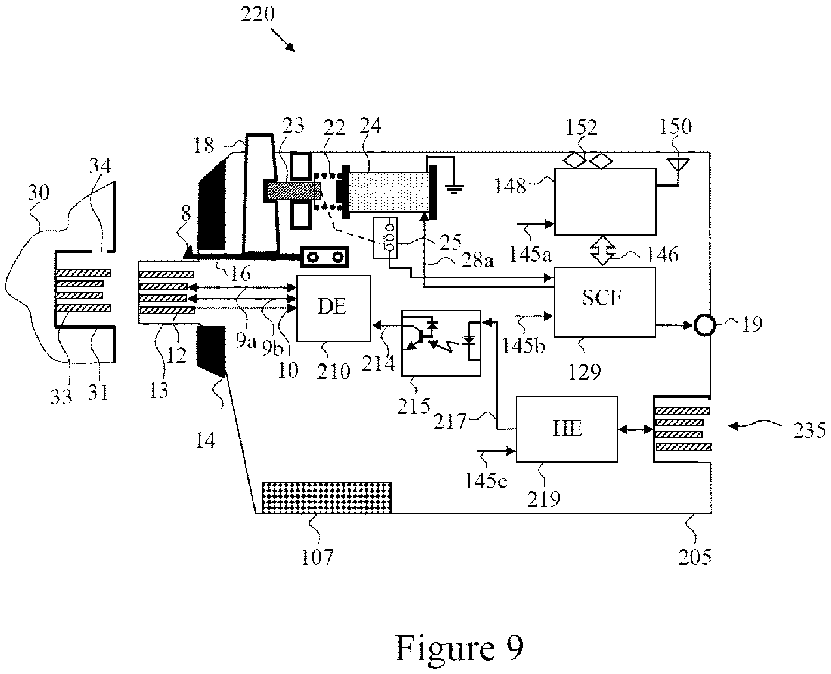

Figure 9 illustrates a high-level block-diagram of an exemplary method and embodiment according to the present invention of a keyboard or mouse security device 220 having a unidirectional data diode function 215. In accordance with this exemplary embodiment of the current invention, the keyboard or mouse security device 220 comprises a device enclosure 205 having a USB jack 235 to enable connection of standard USB keyboard or mouse (not seen in these figures). In the following text it is assumed that a USB keyboard connected to USB jack 235 to simplify the description.

USB user keyboard or mouse jack 235 is coupled with host emulator function (HE) 219. Host emulator function 219 emulates a standard PC USB Human Interface Device host stack by receiving user keyboard entries. Host emulator function 219 is powered from the host device 5V USB power via host USB jack 31, line 10 and 145c. Same 5V power is also used to power the connected user keyboard and mouse through USB user keyboard and mouse jack 235.

Host emulator function 219 is preferably a microcontroller, ASIC (Application Specific Integrated Circuit), FPGA (Field Programmable Gate Array), System on a Chip or any other computing function that is capable of performing the required emulation. Host emulator function 219 converts the keyboard entries received from keyboard into a proprietary unidirectional data stream passed through line 217 to the unidirectional data enforcing device 215. Unidirectional data enforcing device is preferably and optical isolator, inductive isolator or any other electronic circuitry capable of assuring unidirectional data flow. From unidirectional data enforcing device 215 the proprietary unidirectional data stream is coupled through line 214 into the Device Emulator function (DE) 210. Device emulator function 210 emulates a standard PC keyboard device by receiving proprietary unidirectional data stream from line 214 and generating matching user keyboard entries over USB bus (lines 9a and 9b) coupled to the host device 30 via USB contacts 33. Device emulator function 210 is powered from the host device 5V USB power via line 10.

Device emulator function 210 is preferably a microcontroller, ASIC (Application Specific Integrated Circuit), FPGA (Field Programmable Gate Array), System on a Chip or any other computing function that is capable of performing the required emulation. Device emulator function 210 is preferably capable to provide authentication functions similar to the Authentication and security function 27 of figures 3 to 5 above.

It should be noted that the operation of a USB mouse is similar to the operation of the USB keyboard that described above but instead of keyboard inputs, mouse inputs are passed to the host device. Optionally, the same keyboard or mouse security device 220 is capable of interfacing with and transmitting commands from a mouse or a keyboard.

Optionally, the keyboard or mouse security device 220 is capable of interfacing with, and transmitting commands from, both a mouse and a keyboard concurrently. This can be accomplished by having two USB jacks 235, or using an external USB hub or composite USB device, with both mouse and keyboard connected to it. In this exemplary embodiment of the current invention solenoid 24 is driven by SCF 129 that also drives the LED indicator 19. The SCF 129 is also coupled to the switch or sensor 25 to receive indications about the device state. The SCF 129 is powered from the USB interface 5V power through line 145b and 10.

The locking mechanism of this exemplary embodiment of the current invention is similar to the locking mechanism shown in figure 8 above. However, other locking or securing mechanisms may be used within the general scope of the current invention, for example, but not limited to locking or securing mechanisms as seen in other figures in this application, or as known in the art.

The SCF 129 receives control commands from the coupled to the Wired or wireless remote-control receiver function 148 via bi-directional lines or bus 146. Wired or wireless remote-control receiver function 148 receives commands from remote device 155 (seen in figure 8 and not shown in this figure) through antenna 150 or electrical contacts 152. Antenna 150 may be Radio Frequency antenna or an inductor receiving commands through electromagnetic inductance.

The use of this keyboard or mouse security device 220 described herein, having emulators and unidirectional data enforcing device provides the following security advantages over direct connection of USB keyboard or mouse to the host device:
a. It blocks USB devices other than keyboard and mouse;
b. It is capable of blocking unknown USB device connected behind USB hubs or composite USB devices;
c. It prevents abusing of the keyboard or mouse as mail-box to leak information between computers;
d. It prevents operation of an unauthorized device after the removal of the legitimate USB device (mouse or keyboard) and the connection of an unauthorized device instead; and
e. It prevents certain types of attacks that use tampered or modified USB devices.
f. Due to the unidirectional data enforcing device 215, no information may be obtained from host 30, regardless of the type of device connected to USB jack 235.

It should be noted that the topology of keyboard or mouse security device 220 having a unidirectional data diode function 215 may be used for preventing data leak when used with other USB input devices. For example, a user may need to upload imaged from a digital camera to host 30, yet the possibility of transferring images already stored on host 30 is to be prevented. This may be accomplished by adopting Host emulator 219 to communicate with a digital camera and accept data from it (most digital cameras are capable of "pushing" images to a host).

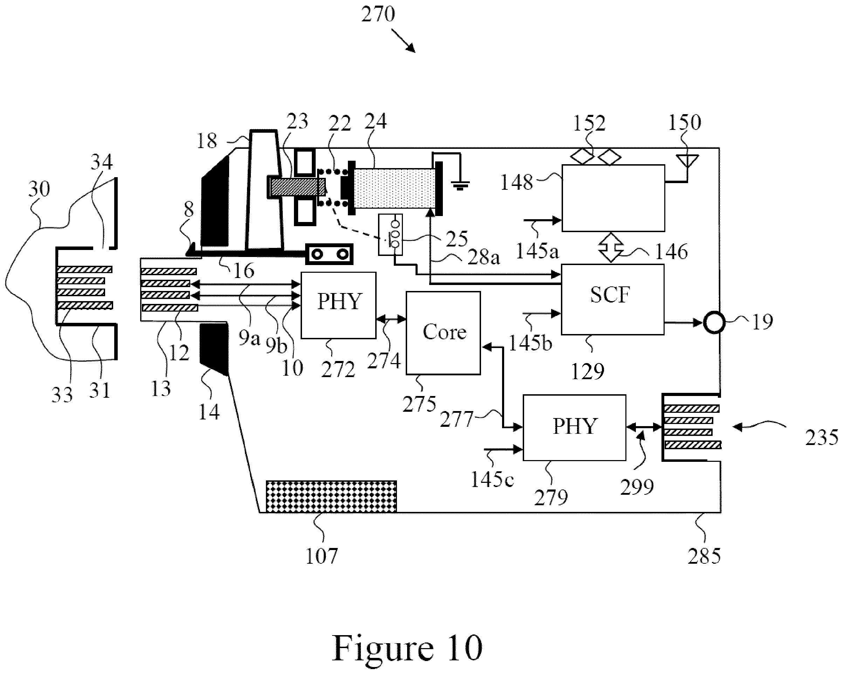

Figure 10 illustrates a high-level block-diagram of yet another exemplary method and embodiment according to the present invention configured of a USB filter security device 270. USB filter security device 270 according to an exemplary embodiment of the current invention comprises a USB jack 235 in the device enclosure 285 that enables connection of specific USB devices to the host device 30 based on pre-defined policy stored in the a USB filter security device 270.

USB jack 235 is coupled to USB Physical layer function (PHY) 279. Physical layer function 279 interfaces between the USB bus 299 and the core function 275 internal bus 277.

Core function 275 is preferably a microcontroller, ASIC (Application Specific Integrated Circuit), FPGA (Field Programmable Gate Array), System on a Chip or any other computing function that is capable of performing the required filtering and security functions.

Core function 275 is programmed to perform the following tasks:
a. Enable enumeration of only predefined user devices based pre-programmed profile. Such profile may include one or more of the following USB characteristics: USB device class, USB device sub-class, protocol, manufacturer ID, Device name, and device serial number.
b. Pass or block specific USB packets based on predefined profile.
c. Prevent reading or writing traffic (enable only specific unidirectional traffic).
d. Emulating USB host and USB device for specific devices.

Core function 275 is further coupled through internal bus 274 to another USB physical layer function (PHY) 272 that is coupled through lines 9a and 9b, USB plug contacts 12 and host device contacts 33 into the host device USB port 31.

It should be noted that the core function 275 may be integrated with the two USB physical layer functions 279 and 272 into a single device having two USB interfaces (for example NXP or FreeScale ARM based microcontrollers having two USB ports).

The locking mechanism of this exemplary embodiment of the current invention is similar to the locking mechanism shown in figures 8 and 9 above. However, other locking or securing mechanisms may be used within the general scope of the current invention, for example, but not limited to locking or securing mechanisms as seen in other figures in this application, or as known in the art.

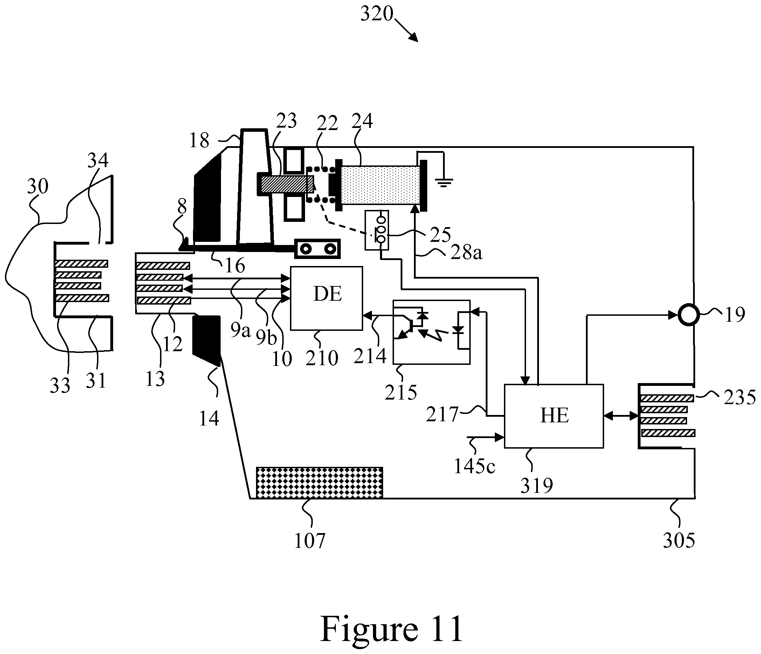

Figure 11 illustrates a high-level block-diagram of yet another exemplary method and embodiment of the present invention configured as keyboard or mouse security device similar to the device in figure 9 above wherein in this embodiment the solenoid 24 is driven by the host emulator function 319. This implementation of the current invention enables the use of connected USB device to unlock the device. For example: a USB keyboard may be connected to the USB jack 235. When the user types a secret key, the host emulator function 319 authenticate that key. If key is correct then the host emulator function 319 energizes the solenoid 24 through solenoid activation line 28a to enable safe removal of the device 320.

The locking mechanism of this exemplary embodiment of the current invention is similar to the locking mechanism shown in figures 8 and 9 above. However, other locking or securing mechanisms may be used within the general scope of the current invention, for example, but not limited to locking or securing mechanisms as seen in other figures in this application, or as known in the art.

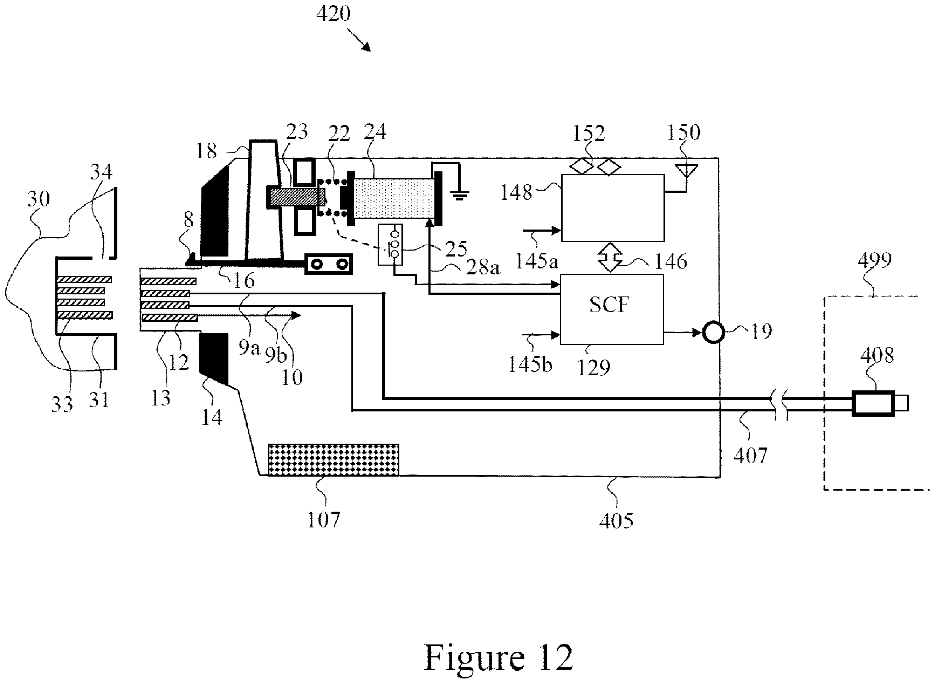

Figure 12 illustrates a high-level block-diagram of yet another exemplary method and embodiment not covered by the claimed invention configured as cable locking device 420. The purpose of such as cable locking device 430 is:
1. To secure the attached USB cable 407 device to the host device USB jack 31; and
2. To prevent unauthorized removal of the cable and connection of an unauthorized USB device to that port.

The exemplary cable locking device shown in figure 12 is having a fixed USB cable 407 and USB plug 408 attached to it through a hole and strain-relief part in the device enclosure 405. Cable 407 is coupled to the USB plug contacts 12 of the cable locking device 420 through lines 9a and 9b. USB plug 5V power line 10 is used to power internal device 420 circuitry.

The locking mechanism of this exemplary embodiment not covered by the claimed invention is similar to the locking mechanism shown in figures 8 to 10 above. However, other locking or securing mechanisms may be used within the general scope of the current invention, for example, but not limited to locking or securing mechanisms as seen in other figures in this application, or as known in the art.

The cable locking device 420 may be used to secure USB KVM (Keyboard Video Mouse) switch cable to a computer.

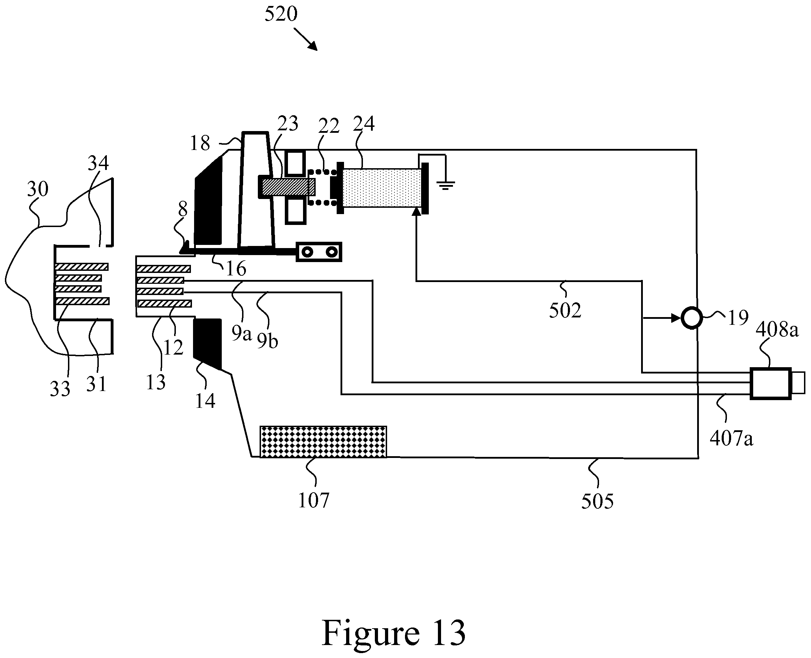

Figure 13 illustrates a high-level block-diagram of yet another exemplary method and embodiment not covered by the claimed invention configured as USB cable locking device 520 having a solenoid that is driven by the attached USB device.

The purpose of such device is to assure that only qualified equipment will be connected to that host computer by locking its USB cable to the host device USB port. This type of USB cable locking device may be used in conjunction with Secure KVM devices or secure peripheral devices. Another advantage of such device is that it secures the peripheral device to the host computer. Such function may be useful in the case of portable USB devices that may be abused to transfer data to other computers.

In this exemplary embodiment not covered by the claimed invention the USB cable locking device 520 is mechanically secured inside host device 30 USB jack 31 through similar solenoid based mechanism as shown in figures 3 to 12 above. In this embodiment not covered by the claimed invention the solenoid 24 is powered from the 5V supply line 502 coupled through USB cable 407a (exiting the device enclosure 505) and USB plug 408a to the attached USB device (not shown here). Attached USB device must switch the power supplied through cable 407a to enable unlock function control when needed. LED indicator 19 may be powered by same USB power line 502 or may be powered by host device 30 USB power if needed as line 502 is energized only when device 520 is being unlocked.

It should be noted that this embodiment not covered by the claimed invention is less complex and less expensive than other options but it requires a non-standard USB port behavior from the attached USB device and therefore standard off-the shelve USB devices may not be used here.

Optionally, USB plug 408 or 408a (and the USB device that is connected to it, and is not seen in this figure) is placed in a secure enclosure 499 such that the user of host 30 cannot access the USB plug 408 and connect an unauthorized USB device to it.

Additionally or alternatively, other security measures are used to prevent disconnecting the authorized USB device from plug 408 and connecting an unauthorized USB device to it. For example, the authorized USB device connected to plug 408 may have an alarm function alerting that plug 408 was disconnected.

Alternatively, USB plug 408 or 408a may be missing, and the authorized USB device permanently attached to the cord 407 or 407a. For example, a keyboard or a mouse (or other authorized devices) having a cord ending with a USB cable locking device 420 or 520 may be securely connected to the host 30.

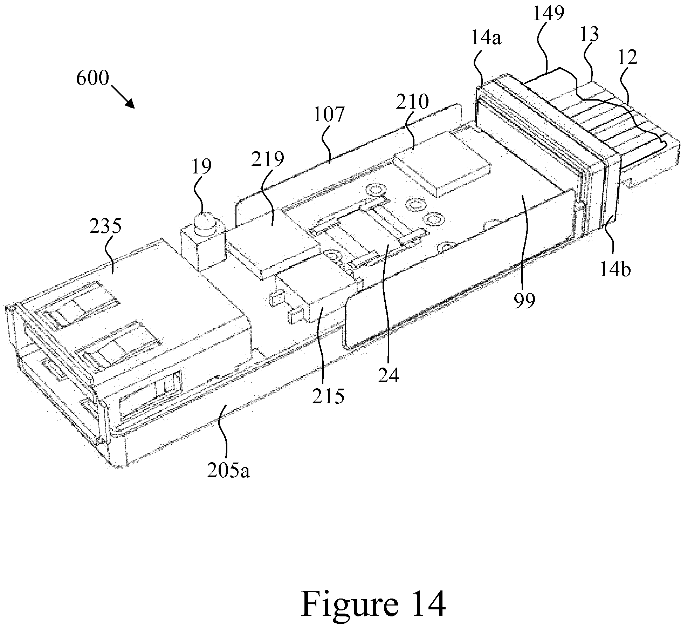

Figure 14 illustrates a bottom side view mechanical diagram of an exemplary embodiment of the present invention configured as keyboard or mouse security device 600 similar to the device 220 in figure 9 above. In this view the bottom enclosure cover part 205b (seen in figure 15) was removed to expose the internal components.

In this embodiment of the current invention USB contacts 12 are printed on a Printed Circuit Board (PCB) 99 that forms the mechanical substrate for the whole device. Filler Removable rings 14a and 14b are plugged to one another to fill the gap between the device enclosure 205 (in this figure the upper half, 205a of the enclosure is seen) and the host device USB jack (not shown here).

Optionally, the rings are gap-fillers and modular and are designed to prevent easy removal while the device is locked. This may be done by:
Optionally the rings are designed in such way that they may be plugged to one another.

Optionally the last ring is constructed to be plug into the device enclosure.

The rings may be made of hard plastic or metal.

An example for oversized rings may be seen and are used by Kensington in their mechanical USB lock mentioned at the background section.

Device emulator function 210 is preferably a bare die, BGA (Ball Grid Array) or QFN (Quad-Flat No-leads) chip soldered, bonded or attached to the PCB 99 near the USB security plug 13. Solenoid 24 is soldered to the same board with four mechanical pins. Host emulator 219 is located near the device USB jack 235. Optical isolator 215 is located near the solenoid 24. LED indicator 19, soldered to the PCB 99, is designed to penetrate the device enclosure bottom part 205b (seen in figure 15) to provide clear visual indications of the device status.

Figure 15 illustrates a top side view mechanical diagram of an exemplary embodiment of the present invention configured as keyboard or mouse security device 600 similar to the device 220 in figure 9 above. In this view the top enclosure cover 205a (seen in figure 14) was removed to expose the internal components.

USB security plug 13 is formed from PCB substrate 99. Top part of Push-button 18 is exposed from the removed enclosure top cover 205a. Push-button 18 is attached to flexible leaf spring 16 having two locking tooth 8a and 8b that are designed to lock inside standard USB jack 33 shielding tab holes 34. Metal lever 23 is mounted on metal hinge 26 with torsion spring 22 loading the metal lever under the leaf spring 16, thus preventing it from flexing downwards. When solenoid 24 is energized, it attracts the left side of the metal lever 23 and rotates counterclockwise the lever against the torsion spring 22 from under the leaf spring 16. This enables the push-button 18 and the leaf spring 16 to bend downwards and release the two locking tooth 8a and 8b from the host USB jack 31.

Tamper Evident Label 107 is attached between the two parts of the device enclosure 205a and 205b to provide clear visual indication if the enclosure parts were separated or tampered.

It should be noted that this or similar locking mechanism may be used with other embodiments, for example the embodiments seen in figures 3-8, and 10-13.

Optional metal shell 149 is placed, optionally on one side, or around security plugs 13 of plugs 20, 120, 220, 270, 320, 420, 520, or 600. Optionally, having an optional metal shell 149 around security plugs 13, plugs 20, 120, 220, 270, 320, 420, 520, or 600 conform with the form factor of standard USB plug except for the locking tooth 8a and 8b.

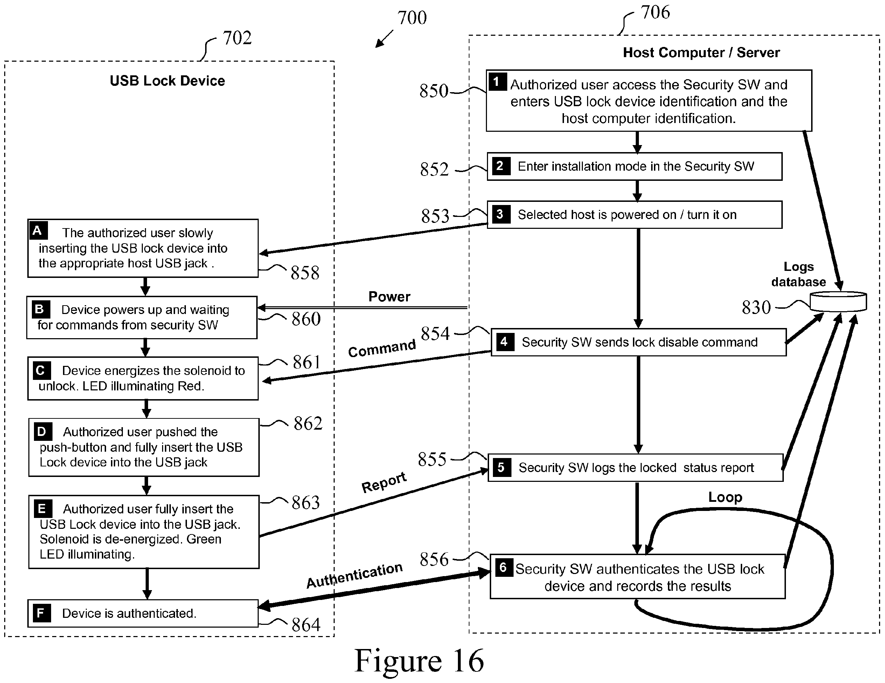

Figure 16 illustrates a flowchart 700 of USB Lock device installation by an authorized user and continuous monitoring. In this figure:
1. The authorized user accesses the Security software executed at the host computer 30 or at another computer or server such as the optional security server 199, having network access to the host computer 706 and enters the applicable USB lock device 702 identification and the host computer 706 identification [See step 1 (850) in figure 16]. Information entered is logged in the log database 830.
2. The authorized user enters installation mode in the Security SW [See step 2 (852) in figure 16].
3. The authorized user verifies that the selected host 706 is powered on or turns on the selected host 706 [See step 3 (853) in figure 16].
4. The authorized user slowly inserting the USB lock device into the appropriate host (30) USB jack (31) [See step A (858) in figure 16].
5. Once USB lock device plug 13 contacts 12 are in contact with the host computer (30) USB jack (31) contacts (33), the USB security device 20, 120, 220, 270, 320, 420, 520, or 600 powers up and is waiting for commands from Security SW [See step B (860) in figure 16].
6. Security SW sends lock disable command to the target USB lock device [See step 4 (854) in figure 16].
7. Once lock disable command was received by the USB security device, solenoid 24 is energized and LED indicator 19 is illuminated in red color [See step C (861) in figure 16].
8. The authorized user can then push the push-button 18 and fully insert the device to the host USB jack 31 [See step D (862) in figure 16].
9. Once the solenoid 24 is de-energized, the USB lock device senses its state through switch or sensor 25 and report back to the Security SW that the device is now locked. LED indicator19 is illuminating in green color to signal the user the secure state. Then, the USB Lock device reports that it is locked to the Security SW, and proper record is logged in the database 830 [See step E (863) in figure 16].
10. The installation event is logged in the security SW log database 830 with data entries such as: authorized user name, inserted USB lock device details, time and date [See step 5 (855) in figure 16].
11. The Security SW periodically re-authenticates each one of the USB Lock devices to maintain the system security. Each successful or unsuccessful authentication event is reported to the log database 830. [See steps 6 (856) and F (864) in figure 16]. Optionally, unsuccessful authentication event issues an alarm, and optionally attempts to disable at least some of the functionality of host 30 to minimize risk.

It should be noted that in some exemplary embodiments of the current invention, the USB lock device may be capable of being inserted and locked while it is unpowered. This can be achieved by designing the lock mechanism to be irreversible: that is, once it is inserted it is locked mechanically. In such case steps 3 to 10 above may not be necessary as host computer may be unpowered during USB lock device installation.

However, optionally, once host 702 is powered, the system is in a state arrived at step 863 (USB security device fully inserted and locked in place), and steps 9 to 10 may commenced.

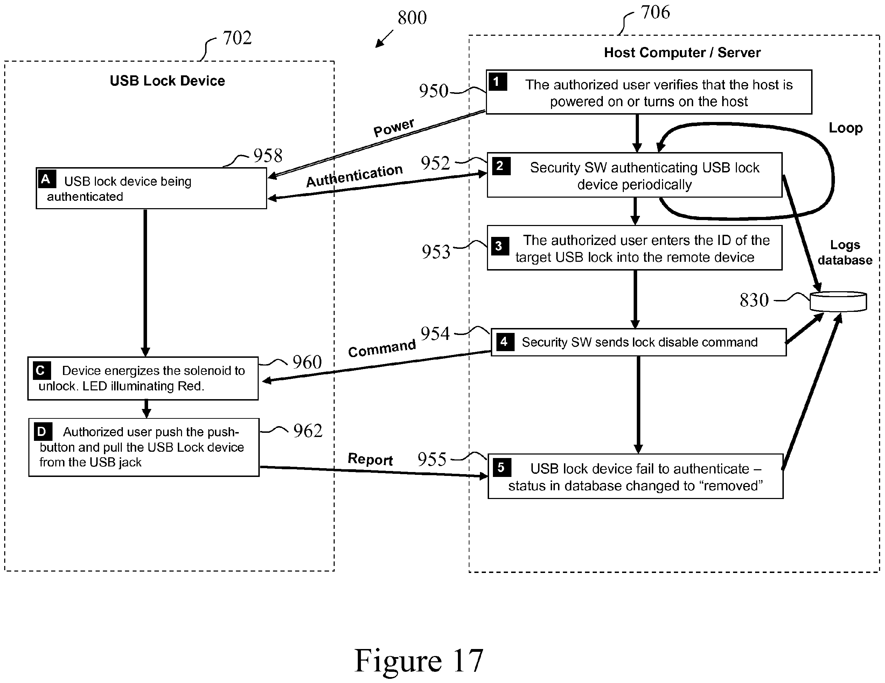

Figure 17 illustrates a flowchart 800 of USB Lock device removal by an authorized user. In this figure:
1. The authorized user verifies that the host 706 is powered on, or turns on the host. [See step 1 (950) in figure 17].
2. Security SW in the host 706 is automatically executed on power-up and periodically communicating with the device 702 (USB security device 20, 120, 220, 270, 320, 420, 520, or 600) to provide continuous security through keep-alive and re-authentication [See step 2 (952) and step A (958) in figure 17]. Information is logged in log database 830. Optionally, unsuccessful authentication event issues an alarm, and optionally attempts to disable at least some of the functionality of host 30 to minimize risk.
3. The authorized user enters the ID of the target USB lock into the remote device 155 [See step 3 (953) in figure 17].
4. Security SW sends lock disable command to the target USB lock device [See step 4 (954) in figure 17].
5. The USB lock device energizing the solenoid 24 and provides proper user indication through Red LED 19 illumination [See step C (960) in figure 17].
6. The authorized user may now push the push-button 18 and pull the USB lock device from the host computer 30 [See step D (962) in figure 17].
7. Once the USB lock device is removed, it fails to communicate with the security SW and as result the security SW changing its state to "removed" to the log database 830. The removal event is logged in the security SW with data entries such as authorized user name, removed USB lock device details, time and date [See step 5 (955) in figure 17].
8. The authorized user then may enable the use of that port through the security SW to enable connection of all or some USB devices as defined by the authorized user permissions level and applicable network management group policies.

Referring back to figure 4, optionally, the user first inserts the USB security plug 20 part ways into USB connector 31 and waits for LED indicator 19 to turn on and indicate (for example by rapid blinking) that solenoid 24 is energized. The user than presses push-button 18, and advances USB security plug 20 all the way into USB connector 31 and then releases push-button 18 engaging locking tooth 8 with shielding tab holes 34. Optionally, after preset dwell time, solenoid 24 is de-energized, locking the USB security plug 20 in place. Optionally, authentication and security function 27 de-energizes solenoid 24 only after performing authentication and logging process against the host computer or server. Such process may prevent locking a USB port on a computer not having the corresponding security software, which may permanently lock the USB port (as there is no way to release the lock).

As used herein, the term "computer" or "module" may include any processor-based or microprocessor-based system including systems using microcontrollers, reduced instruction set computers (RISC), application specific integrated circuits (ASICs), logic circuits, and any other circuit or processor capable of executing the functions described herein. The above examples are exemplary only, and are thus not intended to limit in any way the definition and/or meaning of the term "computer".

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments of the invention without departing from their scope. While the dimensions and types of materials described herein are intended to define the parameters of the various embodiments of the invention, the embodiments are by no means limiting and are exemplary embodiments. Many other embodiments will be apparent to those of skill in the art upon reviewing the above description.

## Claims

1. Electronic USB security device (20), comprising:
a plug (13) capable of interfacing the electronic USB security device (20) with a USB jack (31) of a host device (30),
at least one locking tooth (8) shaped to lock inside a shielding tab hole (34) of said USB jack (31), thus locking the electronic USB security device (20) to said host device (30);
an authentication and security function (27, 129) capable of enabling authentication of the USB Security device (20) by a security software installed at said host during installation of the electronic USB security device (20) on the host device (30), and
a solenoid (24), capable of enabling and disabling the locking of said at least one locking tooth (8) to said shielding tab hole (34) of said USB jack (31)
**characterised by**
a USB jack (235), to connect a user USB device;
a USB Host Emulator function (219, 319), coupled to the said USB jack (235);
a USB Device Emulator function (210) coupled to the said USB plug; and
a unidirectional data flow enforcing device (215), coupled to said USB Host Emulator function unidirectional serial data output, and coupled to the said USB Device Emulator function unidirectional serial data input, forcing data flow only in the direction from said USB Host Emulator function to said USB Device Emulator function,
wherein the device is programmed to enumerate pre-defined user USB devices only.

2. Electronic USB security device (20) of claim 1, wherein the solenoid (24) is controlled by said Authentication and security function in response to commands received from said host.

3. Electronic USB security device (20) of claim 1 or 2, wherein the USB Security device further comprises a visual indicator (19), capable of providing to a user visual indication of device lock and unlock states, wherein said visual indicator is selectable from the group consisting of: Light Emitting Diode (LED); Lamp, electromagnetic colored flag; and Liquid Crystal Display (LCD).

4. Electronic USB security device (20) of one of claims 1 to 3, wherein the USB Security device further comprises a push-button (18), coupled to said at least one locking tooth (8), to enable safe removal of the USB Security device from said host by a user applying mechanical force pushing said push-button.

5. Electronic USB security device (20) of one of claims 1 to 4, wherein the USB Security device further comprises a sensor (25), capable of providing electrical feedback about the state of mechanical locking between USB security device (20) and the USB jack (31) of the host device (30).

6. Electronic USB security device (20) of one of claims 1 to 5 further comprising at least one removable ring selected from a group consisting of:
filler removable ring (14) to enable user device adjustment to various host USB jack wall thicknesses; and
removable oversized ring (32) to enable mechanical blocking of nearby connector.

7. Electronic USB security device (20) of one of claims 1 to 6 further comprising:
at least one Tamper Evident Label (TEL) to enable authenticity validation and device physical tampering visual indications; and /or
a Security Controller Function (129) capable of driving said solenoid (24), wherein said Security Controller Function is coupled to a remote controller receiver function (148), and
wherein said remote-control receiver function is capable of receiving user commands from a remote control device (155).

8. Electronic USB security device (20) of one of claims 1 to 7, wherein the USB Security device further comprises at least one mechanically fixed cable (407), wherein said at least one cable (407) is coupled to the USB plug (13) contacts (12) of said USB Security device.

9. Electronic USB security device (20) of claim 8, wherein said solenoid (24) is controllable through said mechanically fixed cable (407) from a connected USB device.

10. Electronic USB security device (20) of claim 1, wherein said solenoid (24) is controlled by said Host Emulator function (219, 319) to enable device unlocking using a connected USB device.

11. Electronic USB security device (20) of one of claims 1 to 10 further comprising:
a first USB Physical layer function (279) coupled to the said USE (235) of the electronic USB security device; a second USB Physical layer function (272), coupled to the said USB plug (13);
and a Core function (275), said Core function is coupled to said first and second USB Physical layer functions, and is capable of performing functions selectable from the list consisting of:
enabling enumeration of only predefined user devices based pre-programmed profile;
passing only specific USB packets based on predefined profile; blocking specific USB packets based on predefined profile;
acting as a unidirectional device enabling data flow in only one specific direction; and
emulating USB host and USB device for specific devices.

12. Method using an electronic USB security device according to any of claims 1 to 11, comprising removing an electronic USB security device from a USB port of a host computer by an authorized user, **characterised by**:
verifying that the host computer is powered,
wherein a security software in said host computer is automatically executed on power-up of said host and periodically communicating with the electronic USB security device, and wherein said electronic USB security device is locked in the USB port of a host; entering a code associated with said electronic USB security device into a remote device;
communicating and authenticating a lock-release command from said remote device to said electronic USB security device;
in response to said lock-release command, unlocking said electronic USB security device from said USB port; and
removing said electronic USB security device from said USB port, and
performing at least one of:
logging the removal event in said security software;
enabling the use of said USB port through said security software as defined by authorized user permissions level and applicable network management group policies; installing said electronic USB security device by an authorized user, and continuous monitoring of the electronic USB security device by:
accessing a Security software and entering an applicable electronic USB security device
identification and a host computer identification; entering an installation mode in said Security software; verifying that said host computer is powered;
inserting electronic USB security device into the appropriate host USB jack; and authenticating
said the electronic USB security device and recording the results;
logging said installing event in a remote server.

## Patentansprüche

1. Elektronische USB-Sicherheitsvorrichtung (20), umfassend:
einen Stecker (13), der dazu in der Lage ist, die elektronische USB-Sicherheitsvorrichtung (20) mit einer USB-Buchse (31) einer Host-Vorrichtung (30) zu verbinden,
mindestens einen Verriegelungszahn (8), der so geformt ist, dass er in einer Abschirmungslaschenöffnung (34) der USB-Buchse (31) einrastet, wodurch die elektronische USB-Sicherheitsvorrichtung (20) mit der Host-Vorrichtung (30) verriegelt wird;
eine Authentifizierungs- und Sicherheitsfunktion (27, 129), die dazu in der Lage ist, die Authentifizierung der USB-Sicherheitsvorrichtung (20) durch eine Sicherheitssoftware zu ermöglichen, die auf dem Host während der Installation der elektronischen USB-Sicherheitsvorrichtung (20) an der Host-Vorrichtung (30) installiert wird, und
einen Elektromagneten (24), der dazu in der Lage ist, das Einrasten des mindestens einen Verriegelungszahns (8) an der Abschirmungslaschenöffnung (34) der USB-Buchse zu aktivieren und zu deaktivieren,
**gekennzeichnet durch**
eine USB-Buchse (235) zur Verbindung mit einer Benutzer-USB-Vorrichtung;
eine USB-Host-Emulatorfunktion (219, 319), die mit der USB-Buchse (235) gekoppelt ist;
eine USB-Vorrichtungs-Emulatorfunktion (210), die mit dem USB-Stecker (235) gekoppelt ist; und
eine Erzwingungsvorrichtung für unidirektionalen Datenfluss (215), die mit dem unidirektionalen seriellen Datenausgang der USB-Host-Emulatorfunktion gekoppelt ist und mit dem unidirektionalen seriellen Dateneingang der USB-Vorrichtungs-Emulatorfunktion gekoppelt ist und den Datenfluss nur in der Richtung von der USB-Host-Emulatorfunktion zu der USB-Vorrichtungs-Emulatorfunktion erzwingt,
wobei die Vorrichtung dazu programmiert ist, nur vordefinierte Benutzer-USB-Vorrichtungen aufzuzählen.

2. Elektronische USB-Sicherheitsvorrichtung (20) nach Anspruch 1, wobei der Elektromagnet (24) durch die Authentifizierungs- und Sicherheitsfunktion in Reaktion auf Befehle gesteuert wird, die von dem Host empfangen werden.

3. Elektronische USB-Sicherheitsvorrichtung (20) nach Anspruch 1 oder 2, wobei die USB-Sicherheitsvorrichtung des Weiteren eine optische Anzeige (19) umfasst, die dazu in der Lage ist, einem Benutzer eine optische Anzeige von Verriegelungs- und Entriegelungszuständen der Vorrichtung zu liefern, wobei die optische Anzeige aus der Gruppe auswählbar ist, die aus Folgendem besteht: Lichtemittierende Diode (LED); Lampe, elektromagnetische Farbkennzeichnung; und Flüssigkristallanzeige (LCD).

4. Elektronische USB-Sicherheitsvorrichtung (20) nach einem der Ansprüche 1 bis 3, wobei die USB-Sicherheitsvorrichtung des Weiteren eine Drucktaste (18) umfasst, die mit dem mindestens einen Verriegelungszahn (8) verbunden ist, um das sichere Entfernen der USB-Sicherheitsvorrichtung von dem mindestens einen Host dadurch zu ermöglichen, dass ein Benutzer eine mechanische Druckkraft auf die Drucktaste ausübt.

5. Elektronische USB-Sicherheitsvorrichtung (20) nach einem der Ansprüche 1 bis 4, wobei die USB-Sicherheitsvorrichtung des Weiteren einen Sensor (25) umfasst, der dazu in der Lage ist, elektrisches Feedback über den Zustand der mechanischen Verriegelung zwischen der USB-Sicherheitsvorrichtung (20) und der USB-Buchse (31) der Host-Vorrichtung (30) bereitzustellen.

6. Elektronische USB-Sicherheitsvorrichtung (20) nach einem der Ansprüche 1 bis 5, des Weiteren umfassend mindestens einen abnehmbaren Ring, der aus einer Gruppe gewählt wird, die aus Folgendem besteht:
abnehmbarer Füllring (14), um die Anpassung der Benutzervorrichtung an verschiedene Wandstärken der Host-USB-Buchse zu ermöglichen; und
abnehmbarer übergroßer Ring (32), um eine mechanische Blockierung des benachbarten Steckverbinders zu ermöglichen.

7. Elektronische USB-Sicherheitsvorrichtung (20) nach einem der Ansprüche 1 bis 6, des Weiteren umfassend:
mindestens ein fälschungssicheres Etikett (Tamper Evident Label, TEL), um die Echtheitsprüfung und die optische Anzeige von Manipulationen am Gerät zu ermöglichen; und/oder
eine Sicherheitssteuerungsfunktion (129), die dazu in der Lage ist, den Elektromagneten (24) anzusteuern, wobei die Sicherheitssteuerungsfunktion mit einer Fernsteuerungsempfängerfunktion (148) gekoppelt ist, und wobei die Fernsteuerungsempfängerfunktion dazu in der Lage ist, Benutzerbefehle von einer Fernsteuerungsvorrichtung (155) zu empfangen.

8. Elektronische USB-Sicherheitsvorrichtung (20) nach einem der Ansprüche 1 bis 7, wobei die USB-Sicherheitsvorrichtung des Weiteren mindestens ein mechanisch fixiertes Kabel (407) umfasst, wobei das mindestens eine Kabel (407) mit den Kontakten (12) des USB-Steckers (13) der USB-Sicherheitsvorrichtung verbunden ist.

9. Elektronische USB-Sicherheitsvorrichtung (20) nach Anspruch 8, wobei der Elektromagnet (24) durch das mechanisch fixierte Kabel (407) von einer verbundenen USB-Vorrichtung steuerbar ist.

10. Elektronische USB-Sicherheitsvorrichtung (20) nach Anspruch 1, wobei der Elektromagnet (24) durch die Host-Emulatorfunktion (219, 319) gesteuert wird, um die Entriegelung der Vorrichtung unter Verwendung einer verbundenen USB-Vorrichtung zu ermöglichen.

11. Elektronische USB-Sicherheitsvorrichtung (20) nach einem der Ansprüche 1 bis 10, des Weiteren umfassend:
eine erste USB-Bitübertragungsschichtfunktion (279), die mit der USB-Buchse (235) der elektronischen USB-Sicherheitsvorrichtung verbunden ist;
eine zweite USB-Bitübertragungsschichtfunktion (272), die mit dem USB-Stecker (13) verbunden ist, und
eine Kernfunktion (275),
wobei die Kernfunktion mit der ersten und zweiten USB-Bitübertragungsschichtfunktion verbunden und dazu in der Lage ist, Funktionen durchzuführen, die aus der Liste auswählbar sind, die aus Folgendem besteht:
Ermöglichen der Aufzählung von nur vordefinierten Benutzervorrichtungen, basierend auf einem vorab programmierten Profil;
Weiterleiten von nur bestimmten USB-Paketen, basierend auf dem vordefinierten Profil; Blockieren von bestimmten USB-Paketen, basierend auf dem vordefinierten Profil;
Wirken als eine unidirektionale Vorrichtung, die den Datenfluss nur in einer bestimmten Richtung ermöglicht; und
Emulieren eines USB-Hosts und einer USB-Vorrichtung für bestimmte Vorrichtungen.

12. Verfahren unter Verwendung einer elektronischen USB-Sicherheitsvorrichtung nach einem der Ansprüche 1 bis 11, umfassend das Entfernen einer elektronischen USB-Sicherheitsvorrichtung von einem USB-Anschluss eines Host-Computers durch einen autorisierten Benutzer, **gekennzeichnet durch**:
Verifizieren, dass der Host-Computer mit Strom versorgt wird,
wobei eine Sicherheitssoftware in dem Host-Computer automatisch beim Hochfahren des Hosts ausgeführt wird und periodisch mit der elektronischen USB-Sicherheitsvorrichtung kommuniziert, und
wobei die elektronische USB-Sicherheitsvorrichtung in dem USB-Anschluss eines Hosts verriegelt ist;
Eingeben eines Codes, der der elektronischen USB-Sicherheitsvorrichtung zugehörig ist, in eine entfernte Vorrichtung;
Kommunizieren und Authentifizieren eines Sperrfreigabebefehls von der entfernten Vorrichtung an die elektronische USB-Sicherheitsvorrichtung;
in Reaktion auf den Sperrfreigabebefehl, Entriegeln der elektronischen Sicherheitsvorrichtung aus dem USB-Anschluss; und
Entfernen der elektronischen USB-Sicherheitsvorrichtung aus dem USB-Anschluss, und
Durchführen von mindestens einem aus Folgendem:
Anmelden des Entfernungsereignisses in der Sicherheitssoftware;
Ermöglichen der Benutzung des USB-Anschlusses durch die Sicherheitssoftware, wie sie durch die Berechtigungsstufe des autorisierten Benutzers und die anwendbaren Gruppenrichtlinien der Netzwerkverwaltung definiert ist;
Installieren der elektronischen USB-Sicherheitsvorrichtung durch einen autorisierten Benutzer und fortgesetztes Überwachen der elektronischen USB-Sicherheitsvorrichtung durch Folgendes:
Zugreifen auf eine Sicherheitssoftware und Eingeben einer zutreffenden elektronischen USB-Sicherheitsvorrichtungskennung und einer Host-Computer-Kennung;
Eingeben eines Installationsmodus in die Sicherheitssoftware;
Verifizieren, dass der Host-Computer mit Strom versorgt wird,
Einführen der elektronischen USB-Sicherheitsvorrichtung in die geeignete Host-USB-Buchse; und
Authentifizieren der elektronischen USB-Sicherheitsvorrichtung und
Aufzeichnen der Ergebnisse;
Anmelden des Installationsereignisses in einem entfernten Server.

## Revendications

1. Dispositif électronique de sécurité pour USB (20) comprenant :
une prise (13) capable de faire l'interface avec le dispositif électronique de sécurité pour USB (20) avec un connecteur USB (31) d'un dispositif hôte (30),
au moins une dent de verrouillage (8) formée pour se bloquer à l'intérieur d'un trou de patte de blindage (34) dudit connecteur USB (31) en verrouillant ainsi le dispositif électronique de sécurité pour USB (20) vers ledit dispositif hôte (30),
une fonction d'authentification et de sécurité (27, 129) capable de permettre l'authentification du dispositif de sécurité pour USB (20) par un logiciel de sécurité installé sur ledit hôte pendant l'installation du dispositif électronique de sécurité pour USB (20) sur le dispositif hôte (30) et
une vanne électromagnétique (24) capable d'activer et de désactiver le verrouillage de ladite au moins une dent de verrouillage (8) sur ledit trou de patte de blindage (34) dudit connecteur USB (31),
**caractérisé par**
un connecteur USB (235) pour connecter un dispositif USB d'un utilisateur,
une fonction émulateur de l'hôte USB (219, 319) couplée audit connecteur USB (235),
une fonction émulateur du dispositif USB (210) couplée à ladite prise USB et
un dispositif d'application d'un flux unidirectionnel de données (215), couplé à la sortie unidirectionnelle de données série de ladite fonction émulateur de l'hôte USB et couplée à ladite entrée unidirectionnelle de données série de la fonction émulateur du dispositif USB, forçant le flux de données seulement dans la direction de ladite fonction émulateur de l'hôte USB vers ladite fonction émulateur du dispositif USB,
le dispositif étant programmé pour énumérer seulement des dispositifs USB prédéfinis de l'utilisateur.

2. Dispositif électronique de sécurité pour USB (20), selon la revendication 1, la vanne électromagnétique (24) étant commandée par ladite fonction authentification et de sécurité en réponse aux commandes reçues par ledit hôte.

3. Dispositif électronique de sécurité pour USB (20), selon la revendication 1 ou 2, le dispositif de sécurité pour USB comprenant de plus un indicateur visuel (19) capable de fournir à un utilisateur une indication visuelle des états de verrouillage et de déverrouillage du dispositif, ledit indicateur visuel pouvant être sélectionné dans le groupe comprenant une diode électroluminescente (LED), une lampe, un drapeau coloré électromagnétique et un affichage LCD.

4. Dispositif électronique de sécurité pour USB (20), selon l'une des revendications 1 à 3, le dispositif de sécurité pour USB comprenant de plus un bouton poussoir (18) couplé à ladite au moins une dent de verrouillage (8) pour permettre l'enlèvement sûr du dispositif de sécurité pour USB dudit hôte par un utilisateur en appliquant une force mécanique en poussant ledit bouton poussoir.

5. Dispositif électronique de sécurité pour USB (20), selon l'une des revendications 1 à 4, le dispositif de sécurité pour USB comprenant de plus un capteur (25) capable de fournir une réponse électrique sur l'état de verrouillage mécanique entre le dispositif de sécurité pour USB (20) et le connecteur USB (31) du dispositif hôte (30).

6. Dispositif électronique de sécurité pour USB (20), selon l'une des revendications 1 à 5 comprenant de plus au moins un anneau amovible sélectionné dans un groupe comprenant :
un anneau amovible de remplissage (14) pour permettre l'ajustement du dispositif utilisateur à différentes épaisseurs de paroi de connecteurs USB hôtes et
un anneau amovible surdimensionné (32) pour permettre le blocage mécanique d'un connecteur voisin.

7. Dispositif électronique de sécurité pour USB (20), selon l'une des revendications 1 à 6 comprenant de plus au moins une étiquette intraficable (TEL) pour permettre des indications visuelles de validation de l'authenticité et de violation du dispositif et/ou une fonction de contrôleur de sécurité (129) capable de commander ladite vanne électromagnétique (24), cependant que ladite fonction de contrôleur de sécurité est couplée à une fonction de récepteur à distance (148) et ladite fonction de récepteur à distance est capable de recevoir des commandes utilisateur d'un dispositif télécommandé (155).

8. Dispositif électronique de sécurité pour USB (20), selon l'une des revendications 1 à 7, le dispositif de sécurité pour USB comprenant de plus au moins un câble fixé mécaniquement (407), cependant que ledit au moins un câble (407) est couplé aux contacts de la prise USB (13) dudit dispositif de sécurité pour USB.

9. Dispositif électronique de sécurité pour USB (20) selon la revendication 8, ladite vanne électromagnétique (24) pouvant être commandée par ledit câble fixé mécaniquement (407) d'un dispositif USB connecté.

10. Dispositif électronique de sécurité pour USB (20) selon la revendication 1, ladite vanne électromagnétique (24) étant commandée par la fonction émulateur de l'hôte USB (219, 319) pour permettre le déverrouillage du dispositif en utilisant un dispositif USB connecté.

11. Dispositif électronique de sécurité pour USB (20), selon l'une des revendications 1 à 10 comprenant de plus : une première fonction de couche physique USB (279) couplée audit connecteur USB (235) du dispositif électronique de sécurité pour USB, une seconde fonction de couche physique USB (272) couplée à ladite prise USB (13) et une fonction centrale (275),
ladite fonction centrale étant couplée à ladite première et à ladite seconde fonction de couche physique USB et
étant capable d'exécuter des fonctions qui peuvent être sélectionnées dans la liste comprenant :
le fait de permettre l'énumération de seulement un profil prédéfini préprogrammé sur la base des dispositifs utilisateur,
le fait de passer des paquets USB spécifiques basés sur le profil prédéfini, le fait de bloquer des paquets USB spécifiques basés sur le profil prédéfini,
le fait d'agir comme dispositif unidirectionnel permettant le flux de données dans seulement une direction spécifique et
l'émulation de l'hôte USB et du dispositif USB pour des dispositifs spécifiques.

12. Procédé qui utilise un dispositif électronique de sécurité pour USB (20), selon l'une des revendications 1 à 11 qui comprend l'enlèvement d'un dispositif électronique de sécurité pour USB d'un port USB d'un ordinateur hôte par un utilisateur autorisé, **caractérisé par** :
la vérification que l'ordinateur hôte est alimenté en énergie, cependant qu'un logiciel de sécurité dans ledit ordinateur hôte est automatiquement exécuté sous tension dudit hôte et la communication périodique avec le dispositif électronique de sécurité pour USB et
cependant que le dispositif électronique de sécurité pour USB est verrouillé dans le port USB d'un hôte ;
l'entrée d'un code associé audit dispositif électronique de sécurité pour USB dans un appareil à distance ;
la communication et l'authentification d'une commande de déverrouillage dudit dispositif à distance audit dispositif électronique de sécurité pour USB en réponse à ladite commande de déverrouillage,
le déverrouillage dudit dispositif électronique de sécurité pour USB dudit port USB et
l'enlèvement dudit dispositif électronique de sécurité pour USB dudit port USB et
l'exécution d'au moins l'une des fonctions :
enregistrement de l'évènement d'enlèvement dans ledit logiciel de sécurité,
activation de l'utilisation dudit port USB par ledit logiciel de sécurité comme défini par le niveau de permission de l'utilisateur autorisé et les polices de groupe de gestion du réseau applicables,
installation dudit dispositif électronique de sécurité pour USB par un utilisateur autorisé et surveillance continue du dispositif électronique de sécurité pour USB par accès d'un logiciel de sécurité et entrée d'une identification applicable du dispositif électronique de sécurité pour USB et identification d'un ordinateur hôte,
entrée d'un mode d'installation dans ledit logiciel de sécurité, vérification que ledit ordinateur hôte est alimenté en énergie, insertion du dispositif électronique de sécurité pour USB dans le connecteur USB approprié de l'hôte et
authentification dudit dispositif électronique de sécurité pour USB et
enregistrement des résultats,
enregistrement dudit événement d'installation dans un serveur à distance.
